# EUROPEAN PATENT SPECIFICATION

(11) **EP 2 842 776 B1**
(45) Date of publication and mention of the grant of the patent: **27.04.2016**
(21) Application number: 14182219.7
(22) Date of filing: 26.08.2014
(51) Int. Cl.: B60C 23/12, B29D 30/00

(54) **Tire assembly and method of making a tire assembly**
Reifenanordnung und Verfahren zur Herstellung einer Reifenanordnung
Ensemble de pneu et procédé de fabrication d'un ensemble de pneu

(30) Priority: 30.08.2013 US 201361872399 P
(43) Date of publication of application: 04.03.2015
(73) Proprietor: The Goodyear Tire & Rubber Company, Akron, Ohio 44316 (US)
(72) Inventor: Welter, Carolin Anna, 54340 Schleich (DE); Chandra, Dinesh, Stow, OH 44224 (US); Benedict, Robert Leon, Tallmadge, OH Ohio 44278 (US); Gopala, Arun Kumar Byatarayanapura, Copley, OH Ohio 44321 (US)
(74) Representative: Kutsch, Bernd

(56) References cited:
- EP-A1- 2 679 413
- EP-A1- 2 746 074
- DE-A1-102007 001 279
- US-A- 1 050 886

## Description

### Field of the Invention

The invention relates generally to tires and more specifically to a tire assembly, in particular to a tire and pump assembly, and to a method of making a tire assembly or tire and pump assembly. Preferably, the tire assembly is an air maintenance tire.

### Background of the Invention

Normal air diffusion reduces tire pressure over time. The natural state of tires is under inflated. Accordingly, drivers must repeatedly act to maintain tire pressures or they will see reduced fuel economy, tire life and reduced vehicle braking and handling performance. Tire Pressure Monitoring Systems have been proposed to warn drivers when tire pressure is significantly low. Such systems, however, remain dependent upon the driver taking remedial action when warned to re-inflate a tire to recommended pressure. It is a desirable, therefore, to incorporate an air maintenance feature within a tire that will maintain correct air pressure within the tire without a need for driver intervention to compensate for any reduction in tire pressure over time. It is useful to incorporate a filter in the design of an air maintenance tire system, so that the outside air is filtered. It is also useful to incorporate a regulator in the design to admit air into the system only when needed. The filter and regulator must be secured to the tire, and be able to sustain rotational forces. These devices must also be assembled in such a way to minimize the stresses in the tire and allow for ease of assembly.

US-A-1,050,886 describes a tire assembly in accordance with the preamble of claim 1.

Further self-inflating tire assemblies comprising a pump assembly and a regulator device which is able to regulate a fluid from the outside of the tire through a pump passageway into the tire cavity are known from EP-A-2 746 074 and EP-A-2679413, which has been published only after the priority date of this application.

DE-A-10 2007 001 279 describes a tire comprising an electronic module wherein the module is attached to the inside of the tire using an adhesive layer.

### Summary of the Invention

The invention relates to a tire assembly in accordance with claim 1 and to a method of making a tire assembly in accordance with claim 8.

Dependent claims refer to preferred embodiments of the invention.

The invention provides in a first preferred aspect an air maintenance tire and pump assembly including a tire having two spaced inextensible beads, a ground contacting tread portion, a pair of individual sidewalls extending radially inward from the axial outer edges of said tread portion to join the respective beads, a supporting carcass for the tread portion and sidewalls, and an innerliner disposed radially inward of the carcass, the innerliner having a innerliner surface facing an interior cavity of the tire. A pump passageway is enclosed within a bending region of the tire, the pump passageway operatively closing and opening segment by segment as the bending region of the tire passes through a rolling tire footprint to pump air along the air passageway. A regulator device is in fluid communication with the pump passageway, the regulator device operable to regulate the fluid from outside of the tire into the pump passageway, the regulator device having a mounting surface coated with rubber. The mounting surface is adhered to the innerliner surface with a suitable adhesive. In one aspect of the invention, an air inlet port assembly may comprise the regulator assembly.

The invention provides in a second preferred aspect a method for making an air maintenance tire and pump assembly. First, a green tire is provided, wherein a pocket is molded in the sidewall of the tire, wherein the pocket has a hole extending though the side of the tire into the tire cavity. A groove is also molded in the sidewall of the tire, and then the tire is cured. A green rubber patch is then coated on both sides with rubber cement and inserted into the pocket. Next, a filter housing is affixed to the green rubber patch and then cured. Next, filter media is inserted into the filter housing and then a cover is secured to the filter housing.

In one aspect of the invention, the method may further comprise the step of inserting a collar or filter collar about the cover.

In one aspect of the invention, the method may further comprise the steps of inserting a green rubber cover about the circumference of the collar or filter collar, wherein the green rubber cover is coated with rubber cement, wherein the green rubber cover is cured.

In one aspect of the invention, the method may further comprise the steps of molding a first and second hole through the tire on either side of the pocket, and then inserting a first and second pump tube through said holes.

In one aspect of the invention, the method may further comprise the steps of connecting a first pump end and a second pump end to said first and second pump tubes.

In one aspect of the invention, the method may further comprise the step of inserting the pump into the groove.

In one aspect of the invention, the method may comprise the steps: buffing an inside surface of the cured tire; coating a green rubber patch on both sides with rubber cement and inserting the green rubber patch onto the buffed inside surface of the tire; affixing a mounting surface of a regulator to the green rubber patch; curing the green rubber patch.

### Brief Description of the Drawings

The invention will be described by way of example and with reference to the accompanying drawings in which:
FIG. 1 is a front view of tire and rim assembly with a pump, valve and filter assembly;
FIG. 2 is a cross sectional view of a truck tire having a groove in the bead area of the tire;
FIG. 3 is a close up cross-sectional view of the truck tire bead area of FIG. 2 illustrating the pump passageway;
FIG. 4 is a close up cross-sectional view of the truck tire bead area illustrating a filter pocket;
FIG. 5 is a front view of a filter pocket shown in the bead area of the tire;
FIG. 6 is an exploded view of a filter assembly and tire bead area;
FIG. 7 is a cross-sectional view of the portion of the tire illustrating the filter assembly in the pocket of the tire bead area;
FIG. 8 is a front view of the filter assembly installed in the tire;
FIG. 9 is a front perspective view of the filter assembly;
FIG. 10 is a side cross-sectional view of the filter assembly;
FIG. 11 is a perspective view of the filter housing;
Fig. 12 is a cut away view of the filter housing;
Figs. 13-15 are perspective views of a second embodiment of a filter housing;
Fig. 16 is a partial view of a tire mold showing the pocket mold mounted in the mold ring of the tire mold; and
Fig. 17 is a perspective view of the pocket mold subassembly.

### Detailed Description of Example Embodiments of the Invention

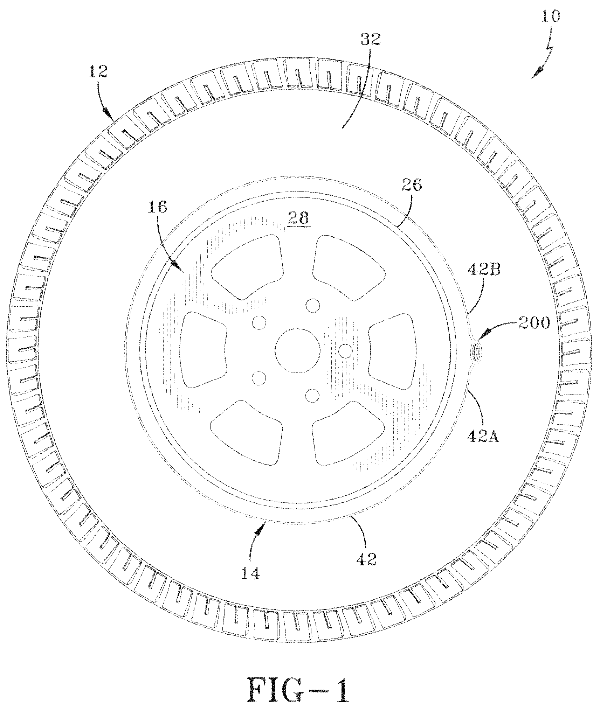

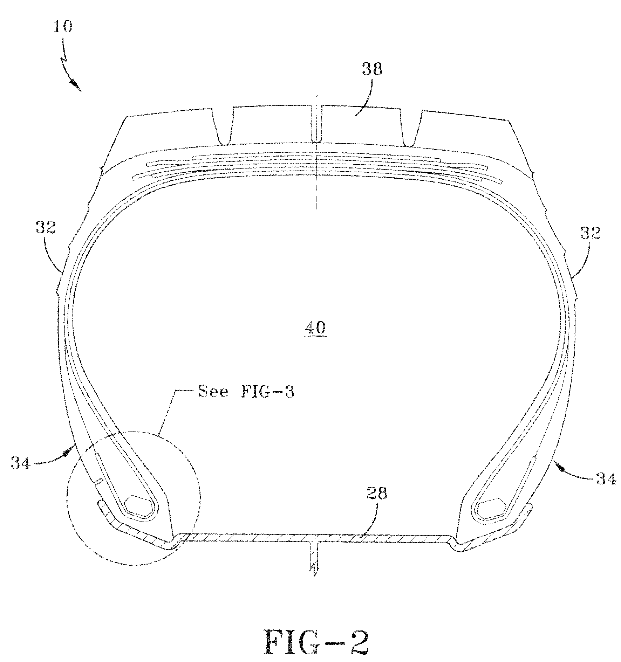

Referring to FIGS. 1 and 2, a tire assembly 10 (also called a tire and pump assembly) includes a tire 12 and a pump assembly 14, which are mounted on a tire wheel 16. The tire 12 mounts in a conventional fashion to the wheel 16 having rim mounting surfaces 18 located adjacent outer rim flanges 22. An annular rim body 28 joins the rim flanges 22 and supports the tire assembly as shown. The tire 12 is of conventional construction, having a pair of sidewalls 32 extending from opposite bead areas 34 to a crown or tire tread region 38. The tire and rim enclose an interior tire cavity 40 which is filled with air. In the example shown, the tire and pump assembly 10 is an air maintenance tire and pump assembly or, shorter, an air maintenance tire.

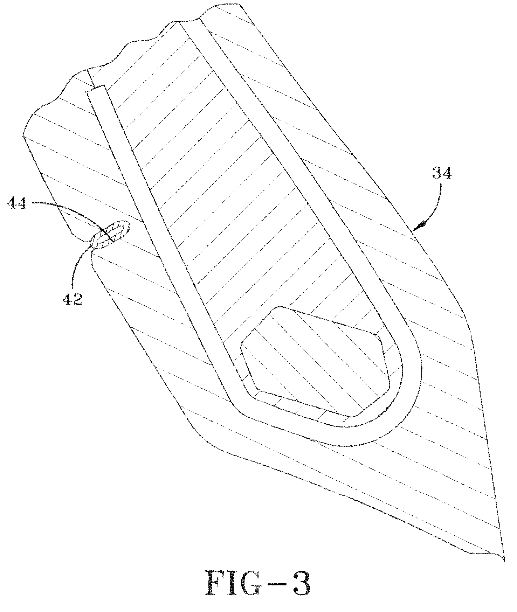

As shown in FIGS. 1 and 3, the tire assembly includes a pump assembly 14 having a pump passageway 42 that is mounted or located in the tire in a channel 44, preferably near the bead area 34 of the sidewall. The pump passageway 42 may be formed of a discrete tube made of a resilient, flexible material such as plastic, elastomer or rubber compounds, and is capable of withstanding repeated deformation cycles when the tube is deformed into a flattened condition subject to external force and, upon removal of such force, returns to an original condition. The tube is of a diameter sufficient to operatively pass a volume of air sufficient for the purposes described herein and allowing a positioning of the tube in an operable location within the tire assembly as will be described. Preferably, the tube has an elliptical cross-sectional shape, although other shapes such as round may be utilized.

The pump passageway 42 itself may also be integrally formed or molded into the sidewall of the tire during vulcanization, eliminating the need for an inserted tube. An integrally formed pump passageway 42 is preferably made by building into a selected green tire component such as a chafer, a removable strip made of wire or silicone. The component is built into the tire and cured. The removable strip is then removed post cure to form a molded in or integrally formed pump air passageway.

Hereinafter, the term "pump passageway" refers either to installed tubes or an integrally molded in passageway. The location selected for the pump passageway 42 within the tire 12 may be within a tire component residing within a high flex region of the tire, sufficient to progressively collapse the internal hollow air passageway as the tire rotates under load thereby conveying air along the pump passageway 42 from the inlet to the outlet.

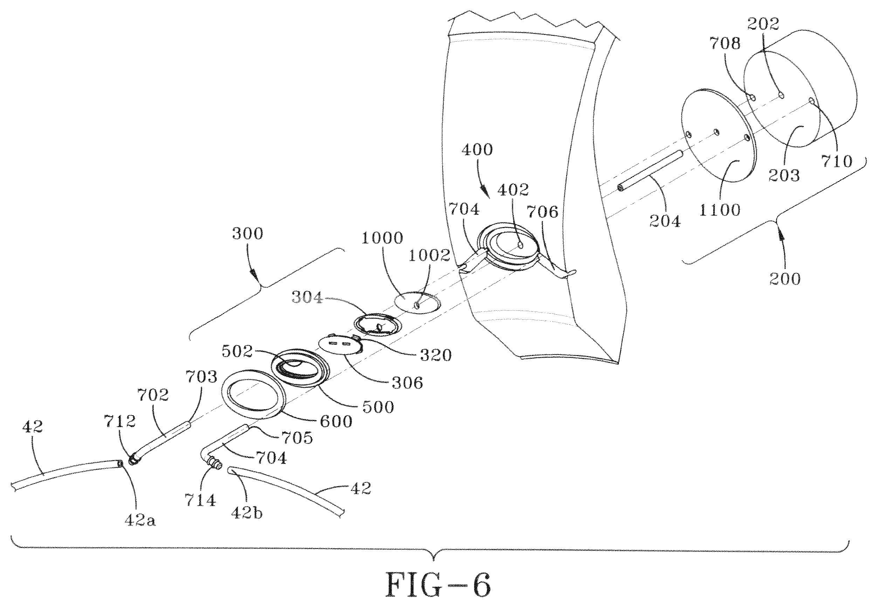

The pump passageway 42 has an inlet end 42A and an outlet end 42B joined together by a valve assembly 200 (also called regulator device), as shown in Figures 6-7. Examples of pressure regulators or valve systems suitable for use with the invention are disclosed in US patent applications 13/221,231, 13/221,433, 13,221,506. As shown in this particular example, the inlet end 42A and the outlet end 42B are spaced apart approximately 360 degrees forming an annular pump assembly. However, the inlet and outlet ends may be spaced apart 90 degrees, 180 degrees, etc.

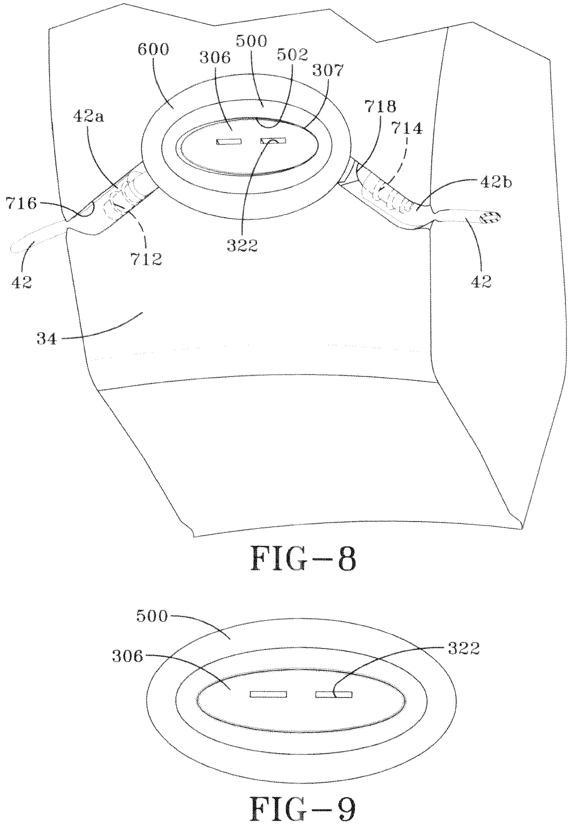

The valve assembly 200 is preferably affixed to the inside of the tire, near the bead area. The valve assembly 200 has an inlet port 202 that is in fluid communication with a central air conduit 204. The central air conduit 204 is in fluid communication with an air filter assembly 300, as shown in Figures 6-8. The central air conduit 204 is preferably a flexible tube or passageway that extends from a filter housing 304 to the inlet port 202 of the valve assembly 200.

The valve assembly 200 is operable to control the amount of inlet air to the pump passageway 42. If the tire cavity pressure falls below a set trigger pressure, the valve device allows air to enter the valve assembly 200 through inlet port 202, and then through to the pump passageway 42. The valve assembly may allow airflow into the pump system through an air inlet port. The valve assembly also may control the flow of air from the pump into the tire cavity 40, as well as prevent cavity air from back flowing into the pump passageway 42.

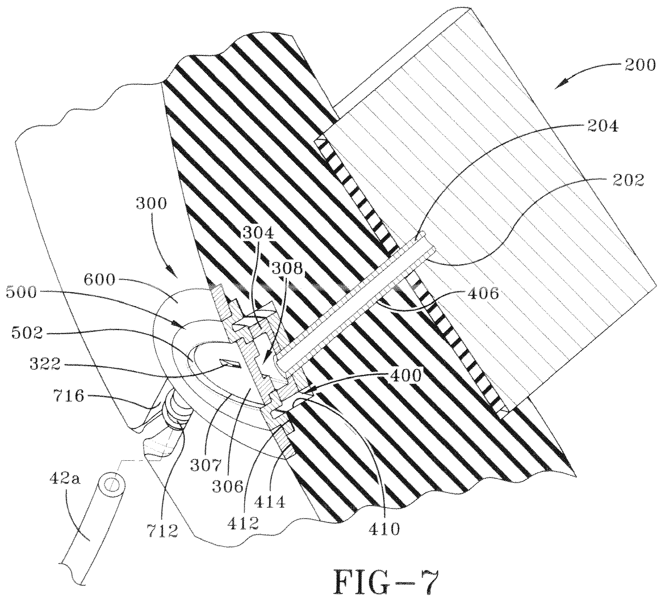

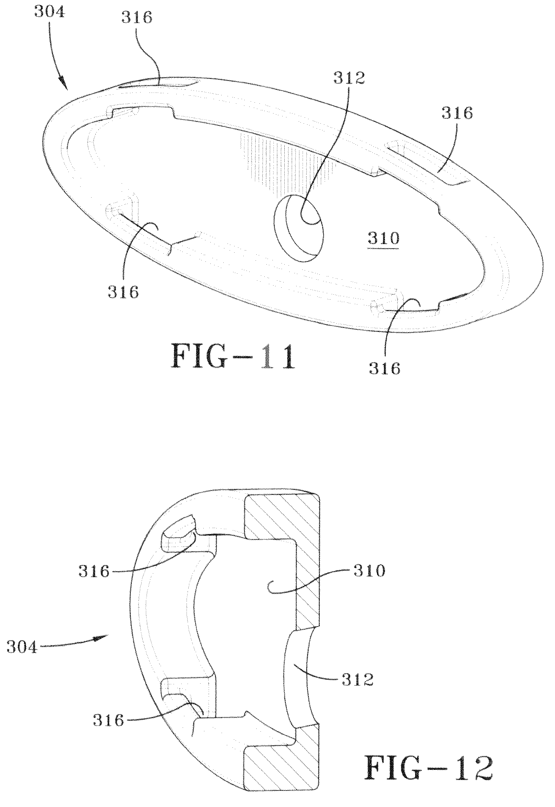

The air filter assembly 300 is positioned on the outer sidewall of the tire 12, in the vicinity of the pump passageway 42, as shown in Figures 6-8. The air filter assembly 300 filters the outside air and communicates the filtered air to the inlet port 202 of the valve assembly 200. The air filter assembly 300 has a housing 304, and a cover 306 which assemble together to form an internal cavity 308. The filter housing 304 is shown in Figures 7, 10, 11, and 12. The filter housing 304 is also preferably elliptical in shape, with the minor axis aligned with the radial direction of the tire. The bottom surface 310 of the filter housing has a hole 312 for reception of a first end of the central air conduit 204. The filter housing has a sidewall 314 preferably having cutouts 316. Tabular ends 320 of the cover 306 may be received in the cutouts 316 to attach the cover 306 to the filter housing 304. The front face of the cover has one or more holes 322. The filter housing 304 and cover 306 may be made of hard plastic or metal.

One or more layers of filter media 550 are received in the internal cavity 308 of the filter assembly 300. The filter media may be a woven or nonwoven fiber, foam, spun fiberglass, charcoal, or other materials known to those skilled the art. Alternatively, a membrane such as PTFE Gore-Tex® may be used, alone or in combination with the filter media 550.

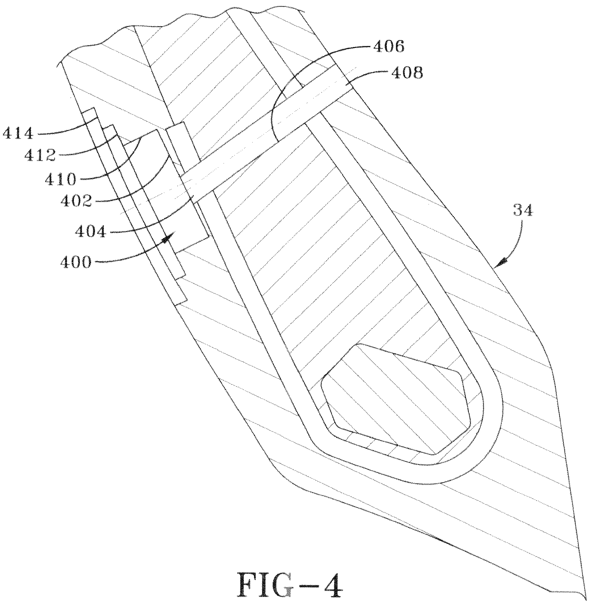

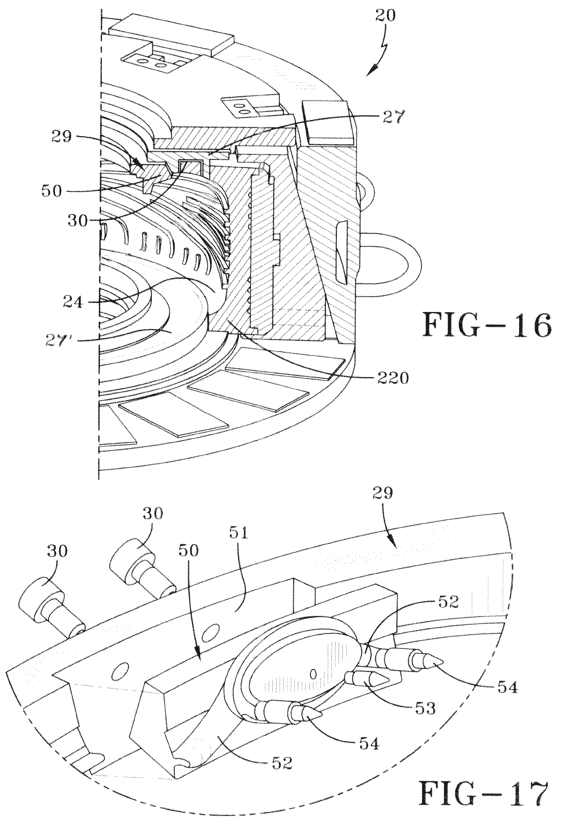

The air filter assembly 300 is mounted in a pocket 400 formed on the outer surface of the tire, typically in the sidewall area near the pump passageways. The pocket 400 is shown in Figures 4-6. The pocket 400 may be molded in the tire during vulcanization using a conventional mold with an adaptor piece to form the pocket (not shown). The pocket 400 may be molded in the tire during vulcanization as follows. Figure 16 illustrates a typical mold 20 used for molding and vulcanizing a green tire. The mold assembly typically comprises a plurality of segments 220 which are arranged to form an annular ring to encircle the tread of a green tire when the segments are assembled together. The outer tread surface of a tire is formed by the inner molding surface 24 of the segments 220. A sidewall plate 27, 27' is used to mold the sidewalls 32 of the tire 12. Adjacent the sidewall plate 27 is a mold ring 29 that molds the inner bead region of the tire. As shown in Figure 17, a section of the mold ring 29 has a cutout portion 51 for receiving a pocket mold 50. The pocket mold 50 may be secured to the mold ring 29 via bolts 30. The pocket mold 50 forms the pocket 400 in the tire sidewall area. Alternatively, the sidewall plate 27 may also be used to install the pocket mold 52, depending on the desired location of the filter assembly. As shown in Figure 17, the pocket mold 50 forms or molds an elliptically shaped pocket 400 into the tire sidewall bead area, and the barb 53 of the pocket mold forms the passageway 406 through the tire sidewall. The pocket mold has wings 52 located on either side of the pocket 400. The wings 52 form the slots 716,718 that are used to house the pump tubes 702,703. Barbs 54 on the pocket mold form holes 704, 706 that extend completely through the tire sidewall.

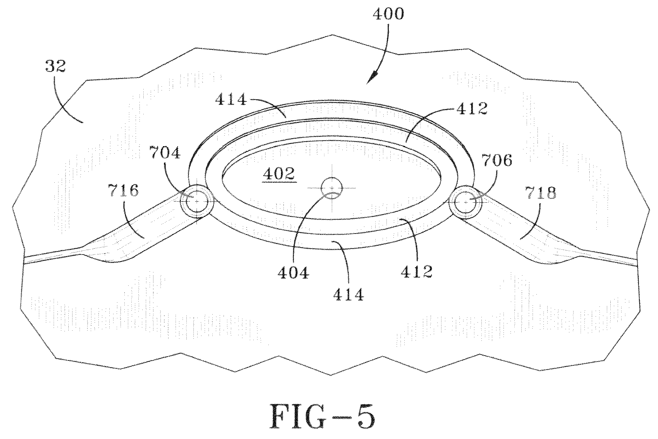

Alternatively, the pocket 400 may be formed in a vulcanized tire, post cure by laser cutting. As shown in Figure 5, the general shape of the pocket 400 is curved, with no corners to eliminate stress concentrations. It is preferred that the pocket is also elliptical in shape, with the minor axis of the ellipse aligned with the radial direction of the tire. The pocket may also be round. The depth of the pocket is preferably 5-15 mm, the major axis width is preferably 20-40 mm, and the minor axis width is preferably 8-15 mm. The pocket has a bottom surface 402 having a hole 404 that is connected to a passageway 406 formed through the tire to the tire cavity, so that fluid may communicate from the hole 404 in the pocket to the passageway exit 408. An optional central air conduit 204 is positioned in the passageway 406 to communicate filtered air to the valve assembly 200. Alternatively, the passageway 406 may be used to communicate fluid to the cavity from the pocket.

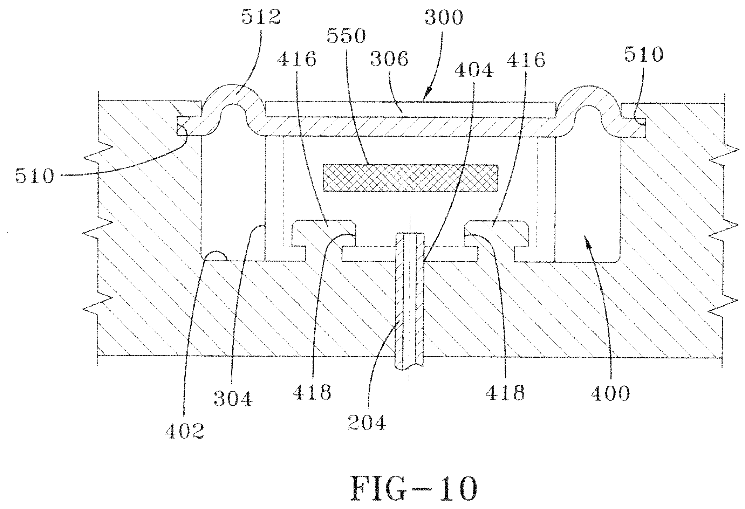

The bottom surface 402 of the pocket may further optionally include molded in attachment knobs 416 as shown in Figure 10. The attachment knobs 416 may be used to secure a filter housing to the pocket. The bottom of the filter housing may have recesses 418 which allow the knobs 416 to snap inside, as shown in Figure 10. Alternatively, the filter housing may have knobs (not shown) which are secured into recesses of the pocket (not shown).

The pocket 400 further includes a sidewall 410. The sidewall 410 is surrounded by a first and second ledge 412, 414 joined together. A preferably flexible collar 500 has an interior hole 502 wherein the interior hole is positioned around the outer circumferential edge 307 of the cover 306. The collar 500 has a second end positioned on the first ledge 412. Alternatively, the second end may be positioned in a slot 510 formed in the sidewall of the pocket, as shown in Figure 10. The cross-sectional profile 512 of the flexible collar may be U-shaped. The flexible collar allows for the +/- 10% sidewall strain seen in tire service while protecting the filter media from flexing. The flexible collar 500 is made from a flexible material such as rubber.

A green (unvulcanized) rubber ring 600 has an inner hole that is positioned about the outer circumference of the collar 500 and wherein the outer portion of the rubber ring is positioned on the second, outer ledge 414. The green rubber ring 600 has an inner side which is coated with a suitable adhesive as described below. The green rubber ring 600 is then cured over the flexible collar and affixed to the sidewall of the tire. The green rubber ring 600 may be cured by heat.

As shown in Figures 7 and 10, the filter housing major axis dimension and minor axis dimension is preferably smaller than the pocket internal cavity 308, such that there is a gap surrounding the filter housing. The spatial gap is preferably in the range of from 2 mm to 8 mm.

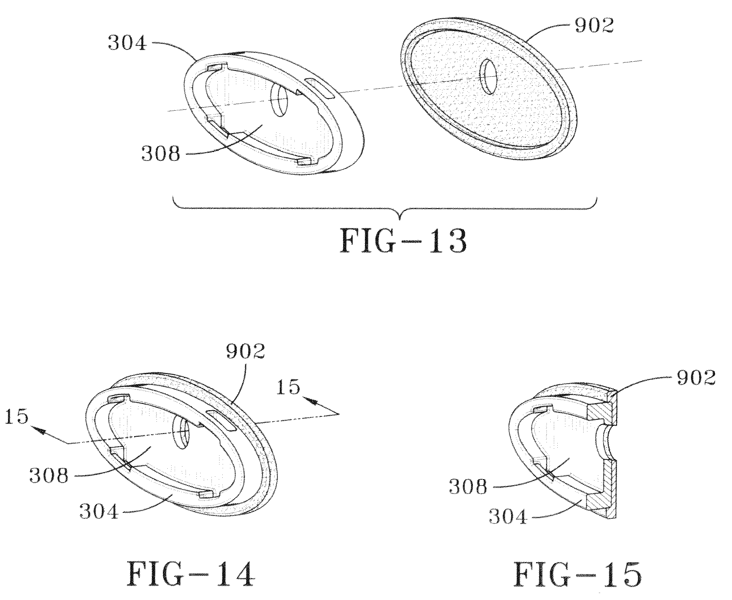

In order to affix the filter assembly to the tire, the following steps are followed. First, the bottom and sides of the filter housing are buffed with abrasive material such as sandpaper. Next the bottom and sides of the filter housing are pretreated with Chemlock or other suitable adhesive. Preferably, the filter housing is placed in a mold and rubber is injection molded to enrobe the housing bottom and sides of the filter housing with rubber or elastomer. See Figures 13-15 which illustrate the enrobed filter housing 304 with a coating 902 of green rubber or elastomer. The type of rubber can be a rubber used as cushion gum in tires, however other types of rubber may be used as well. The coating of rubber 902 may be cured or partially cured about the housing.

Next, the pocket bottom surface 402 is buffed. As shown in Figure 6, a green rubber patch 1000 is used to secure the filter housing to the tire pocket bottom surface. The green rubber patch 1000 is buffed on both sides. The rubber patch 1000 is then coated with a suitable adhesive on both sides and then inserted onto the pocket bottom surface. The patch 1000 preferably has a hole 1002 that is aligned with hole 402 of pocket. One suitable adhesive is Fast Dry Self-vulcanizing Cement made by the Rubber Patch Company. The filter housing is then inserted onto the rubber patch 1000, ensuring the holes 1002, 402 and 312 are aligned. Preferably, the filter housing bottom has a rubber coating 902 which is first buffed, and then affixed to the rubber patch 1000.

Alternatively, the pocket bottom surface and filter housing bottom 402 may be coated with a suitable adhesive, eliminating the need to coat both sides of the patch with a suitable adhesive.

The filter housing bottom, patch and pocket and adhesive may then be heat cured or cured at room temperature.

The following steps are followed to mount the regulator device 200. First, the regulator mounting surface 203 and sides of the regulator are buffed with abrasive material such as sandpaper. Next the mounting surface 203 and sides of the regulator are pretreated with Chemlock or other suitable adhesive, ensuring the holes 708, 202, 710 are protected from the application of adhesive. Preferably, the regulator housing is placed in a mold and rubber is injection molded to enrobe the regulator mounting surface and sides with rubber or elastomer such as cushion gum, however any type of rubber would work. The coating of rubber may be cured or partially cured about the regulator housing.

Next, inner liner surface of the tire is buffed. Depending upon the weight of the regulator, the inner tire surface may need to be buffed down to the ply. As shown in Figure 6, a green rubber patch 1100 is used to secure the regulator to the tire pocket bottom surface. The green rubber patch 1100 is buffed on both sides. The green rubber patch 1100 is then coated with a suitable adhesive on both sides and then inserted onto the inner surface of the tire. The patch 1100 preferably has holes that are aligned with holes 704, 404, 706 of tire. One suitable adhesive is Fast Dry Self-vulcanizing Cement made by the Rubber Patch Company. The Next, the regulator mounting surface is mounted over the rubber patch 1100, ensuring the holes are aligned with the regulator holes 708, 202, 710 and with tire holes 704, 404, 706. The regulator is then cured to the tire with heat or room temperature cure, depending upon the adhesive selected.

Adjacent the pocket 400 are two holes 704, 706 as shown in Figure 5. The holes 704, 706 extend through the sidewall of the tire and are in fluid communication with aligned holes 708, 710 of the regulator. Pump tubes 702, 704 have a first end 703, 705 that are inserted through holes 704, 706 and into regulator holes 708, 710. Pump tubes 702, 704 preferably have quick connects on both ends such as barbs, etc so that the system may be easily assembled. Pump tubes 702, 704 are preferably made of high strength polyurethane. Pump tubes have a second end 712, 714 that are preferably bent about 90 degrees. The second ends 712, 714 are connected to the pump ends 42a, 42b and then inserted into slots 716, 718 formed adjacent the pocket.

After the pump passageway 42 is connected to the second ends 712, 714 of the pump tubes, the pump passageway 42 is inserted into channel 44. Preferably, the pump passageway is coated with rubber cement and then inserted into the pump passageway. A green cover strip of rubber having an inner surface is first coated with rubber cement and then is placed over the pump passageway in the annular channel. Heat may be used to cure the rubber cement.

## Claims

1. A tire assembly comprising a tire (12) having two beads, a tread portion (38), a pair of sidewalls (32) extending radially inward from axial outer edges of the tread portion (38) to a respective bead area (34), a supporting carcass, and an innerliner disposed radially inward of the carcass, the innerliner having a innerliner surface facing an interior cavity (40) of the tire (12), the assembly further comprising a pump passageway (42) enclosed within a bending region of the tire (12), the pump passageway (42) operatively closing and opening segment by segment as the bending region of the tire (12) passes through a rolling tire footprint to pump air along the pump passageway (42), and a regulator device (200) in fluid communication with the pump passageway (42), wherein the regulator device (200) is operable to regulate fluid from outside of the tire (12) into the pump passageway 42), **characterized in that** the regulator device (200) has a mounting surface coated with rubber (1100) and adhered to the innerliner surface with an adhesive.

2. The tire assembly of claim 1 wherein the regulator device (200) is in fluid communication with a pocket (400) formed in the tire (12) and a filter assembly (300) mounted in the pocket (400).

3. The tire assembly of claim 1 or 2 wherein the pocket (400) is an elliptical pocket formed in the tire (12), wherein the pocket minor axis is aligned with the radial direction of the tire (12), and wherein the filter assembly (300) is elliptical in shape.

4. The tire assembly of at least one of the previous claims wherein the filter assembly (300) is formed of a housing (304) and a cover (306), wherein the housing (304) and/or the cover (306) is rubber-coated.

5. The tire assembly of at least one of the previous claims wherein the filter assembly (300) is formed of a housing (304) and a cover (306), the cover having one or more holes (322) for communicating air into the housing (304), wherein the cover (306) is connected to the housing (304), the housing (304) having an interior cavity (308) having a filter media (550) housed therein, wherein the housing (304) has a hole (312) in fluid communication with the valve assembly (200), and wherein a preferably flexible collar (500) surrounds the cover (306).

6. The tire assembly of at least one of the previous claims wherein the pocket (400) has an area larger than the area of a filter housing (304).

7. The tire assembly of at least one of the previous claims wherein the tire assembly (10) is an air maintenance tire assembly.

8. A method for making a tire assembly, the method comprising the steps of:
a. providing a green tire having a sidewall and a tire cavity;
b. molding a pocket (400) in the sidewall of the tire, the pocket having a hole extending though the sidewall of the tire into the tire cavity;
c. molding a groove in the sidewall of the tire;
d. curing the tire;
e. coating a green rubber patch (1000) on both sides of the patch with rubber cement and inserting the green rubber patch into the pocket (400);
f. affixing a filter housing bottom to the green rubber patch (1000);
g. curing the green rubber patch (1000);
h. inserting a filter media (550) into the filter housing (304);
i. securing a cover (306) to the filter housing (304).

9. The method of claim 8 further comprising the steps of inserting a preferably flexible collar (500) or filter collar about the cover (306).

10. The method of claim 8 or 9 further comprising the steps of inserting a green rubber cover about the circumference of the collar or filter collar, wherein the green rubber cover is coated with rubber cement.

11. The method of claim 10 wherein the green rubber cover is cured.

12. The method of at least one of the previous claims 8 to 11 further comprising the steps of molding a first and second hole through the tire on either side of the pocket (400), and then inserting a first and second pump tube through said holes.

13. The method of at least one of the claims 8 to 12 further comprising the steps of connecting a first pump end and a second pump end to said first and second pump tubes.

14. The method of at least one of the claims 8 to 12 further comprising the step of inserting the pump into the groove.

15. The method of at least one of the claims 8 to 14 further including the following steps:
j. buffing an inside surface of the cured tire (12);
k. coating a green rubber patch (1100) on both sides with rubber cement and inserting the green rubber patch onto the buffed inside surface of the tire (12);
l. affixing a mounting surface of a regulator device (200) to the green rubber patch (1100);
m. curing the green rubber patch (1100).

## Patentansprüche

1. Reifenanordnung, umfassend einen Reifen (12) mit zwei Wülsten, einem Laufflächenteil (38), einem Paar Seitenwänden (32), die sich von axialen Außenkanten des Laufflächenteils (38) radial einwärts zu einem jeweiligen Wulstbereich (34) erstrecken, einer tragenden Karkasse, und einer radial einwärts von der Karkasse angeordneten Innenisolierung, wobei die Innenisolierung eine Innenisolierungsfläche aufweist, die einem inneren Hohlraum (40) des Reifens (12) zugewandt ist, wobei die Anordnung weiter einen in einem Biegebereich des Reifens (12) angeordneten Pumpendurchgang (42) umfasst, wobei der Pumpendurchgang (42) sich Segment für Segment wirksam öffnet und schließt, wenn der Biegebereich des Reifens (12) eine Aufstandsfläche eines rollenden Reifens durchläuft, um Luft durch den Pumpendurchgang (42) zu pumpen, und eine Regelvorrichtung (200) in Fluidkommunikation mit dem Pumpendurchgang (42) umfasst, wobei die Regelvorrichtung (200) betreibbar ist, um Fluid von außerhalb des Reifens (12) in den Pumpendurchgang (42) zu regulieren, **dadurch gekennzeichnet, dass** die Regelvorrichtung (200) eine Montagefläche aufweist, die mit Kautschuk (1100) beschichtet ist und mit einem Klebstoff an die Innenisolierungsfläche geheftet ist.

2. Reifenanordnung nach Anspruch 1, wobei die Regelvorrichtung (200) in Fluidkommunikation mit einem in dem Reifen (12) gebildeten Fach (400) und einer in dem Fach (400) montierten Filteranordnung (300) steht.

3. Reifenanordnung nach Anspruch 1 oder 2, wobei das Fach (400) ein in dem Reifen (12) geformtes elliptisches Fach (400) ist, wobei die Nebenachse des Fachs zu der radialen Richtung des Reifens (12) ausgerichtet ist, und wobei die Filteranordnung (300) von elliptischer Form ist.

4. Reifenanordnung nach mindestens einem der vorhergehenden Ansprüche, wobei die Filteranordnung (300) aus einem Gehäuse (304) und einer Abdeckung (306) gebildet ist, wobei das Gehäuse (304) und/oder die Abdeckung (306) kautschukbeschichtet ist.

5. Reifenanordnung nach mindestens einem der vorhergehenden Ansprüche, wobei die Filteranordnung (300) aus einem Gehäuse (304) und einer Abdeckung (306) gebildet ist, wobei die Abdeckung eine oder mehrere Öffnungen (322) zum Kommunizieren von Luft in das Gehäuse (304) aufweist, wobei die Abdeckung (306) mit dem Gehäuse (304) verbunden ist, wobei das Gehäuse (304) einen inneren Hohlraum (308) mit einem darin untergebrachten Filtermedium (550) aufweist, wobei das Gehäuse (304) eine Öffnung (312) in Fluidkommunikation mit der Ventilanordnung (200) aufweist, und wobei ein bevorzugt flexibler Kragen (500) die Abdeckung (306) umgibt.

6. Reifenanordnung nach mindestens einem der vorhergehenden Ansprüche, wobei das Fach (400) einen Flächeninhalt aufweist, der größer als der Flächeninhalt eines Filtergehäuses (304) ist.

7. Reifenanordnung nach mindestens einem der vorhergehenden Ansprüche, wobei die Reifenanordnung (10) eine Luftdruckaufrechterhaltungs-Reifenanordnung ist.

8. Verfahren zur Herstellung einer Reifenanordnung, wobei das Verfahren die Schritte umfasst des:
a. Bereitstellens eines Reifenrohlings mit einer Seitenwand und einem Reifenhohlraum;
b. Einformens eines Fachs (400) in die Seitenwand des Reifens, wobei das Fach eine Öffnung aufweist, die sich durch die Seitenwand des Reifens bis in den Reifenhohlraum erstreckt;
c. Einformens einer Nut in die Seitenwand des Reifens;
d. Vulkanisierens des Reifens;
e. Beschichtens eines Flickens (1000) aus unvulkanisiertem Kautschuk an beiden Seiten des Flickens mit Gummilösung und Einbringens des Flickens aus unvulkanisiertem Kautschuk in das Fach (400);
f. Befestigens eines Filtergehäusebodens an dem Flicken (1000) aus unvulkanisiertem Kautschuk;
g. Vulkanisierens des Flickens (1000) aus unvulkanisiertem Kautschuk;
h. Einbringens eines Filtermediums (550) in das Filtergehäuse (304);
i. Befestigens einer Abdeckung (306) an dem Filtergehäuse (304).

9. Verfahren nach Anspruch 8, weiter die Schritte umfassend des Einbringens eines bevorzugt flexiblen Kragens (500) oder Filterkragens um die Abdeckung (306).

10. Verfahren nach Anspruch 8 oder 9, weiter die Schritte umfassend des Einbringens einer Abdeckung aus unvulkanisiertem Kautschuk um den Umfang des Kragens oder Filterkragens, wobei die Abdeckung aus unvulkanisiertem Kautschuk mit Gummilösung beschichtet ist.

11. Verfahren nach Anspruch 10, wobei die Abdeckung aus unvulkanisiertem Kautschuk vulkanisiert wird.

12. Verfahren nach mindestens einem der vorhergehenden Ansprüche 8 bis 11, weiter die Schritte des Einformens einer ersten und einer zweiten Öffnung durch den Reifen zu beiden Seiten des Fachs (400) und dann Einbringens eines ersten und eines zweiten Pumpenschlauchs durch diese Öffnungen umfassend.

13. Verfahren nach mindestens einem der Ansprüche 8 bis 12, weiter die Schritte des Verbindens eines ersten Pumpenendes und eines zweiten Pumpenendes mit besagtem ersten und zweiten Pumpenschlauch umfassend.

14. Verfahren nach mindestens einem der Ansprüche 8 bis 12, weiter den Schritt des Einbringens der Pumpe in die Nut umfassend.

15. Verfahren nach mindestens einem der Ansprüche 8 bis 14, weiter die folgenden Schritte umfassend:
j. Polieren einer Innenfläche des vulkanisierten Reifens (12);
k. Beschichten eines Flickens (1100) aus unvulkanisiertem Kautschuk an beiden Seiten mit Gummilösung und Einbringen des Flickens aus unvulkanisiertem Kautschuk auf die polierte Innenfläche des Reifens (12);
l. Befestigen einer Montagefläche einer Regelvorrichtung (200) an dem Flicken (1100) aus unvulkanisiertem Kautschuk;
m. Vulkanisieren des Flickens (1100) aus unvulkanisiertem Kautschuk.

## Revendications

1. Assemblage de bandage pneumatique comprenant un bandage pneumatique (12) comportant deux talons, une portion faisant office de bande de roulement (38), une paire de flancs (32) s'étendant en direction radiale vers l'intérieur à partir des bords axiaux externes de la portion (38) faisant office de bande de roulement jusqu'à une zone de talon respective (34), une carcasse de support, et un calandrage intérieur disposé en direction radiale à l'intérieur de la carcasse, le calandrage intérieur possédant une surface de calandrage intérieur tournée vers une cavité interne (40) du bandage pneumatique (12), l'assemblage comprenant en outre une voie de passage de pompe (42) incluse dans une zone de flexion du bandage pneumatique (12), la voie de passage de pompe (42) se fermant et s'ouvrant de manière opérante segment par segment au fur et à mesure du passage de la zone de flexion du bandage pneumatique (12) par une empreinte de bandage pneumatique en train de rouler pour pomper de l'air le long de la voie de passage de pompe (42), et un dispositif de régulation (200) mis en communication par fluide avec la voie de passage de pompe (42), dans lequel le dispositif de régulation (200) peut être activé pour réguler l'écoulement de fluide depuis l'extérieur du bandage pneumatique (12) jusque dans la voie de passage de pompe (42), **caractérisé en ce que** le dispositif de régulation (200) possède une surface de montage enrobée de caoutchouc (1100) et qui adhère à la surface du calandrage intérieur avec un adhésif.

2. Assemblage de bandage pneumatique selon la revendication 1, dans lequel le dispositif de régulation (200) est mis en communication par fluide avec une poche (400) formée dans le bandage pneumatique (12) et avec un assemblage de filtre (300) monté dans la poche (400).

3. Assemblage de bandage pneumatique selon la revendication 1 ou 2, dans lequel la poche (400) est une poche elliptique formée dans le bandage pneumatique (12), le petit axe de la poche étant mis en alignement avec la direction radiale du bandage pneumatique (12) et dans lequel l'assemblage de filtre (300) est de configuration elliptique.

4. Assemblage de bandage pneumatique selon au moins une des revendications précédentes, dans lequel l'assemblage de filtre (300) est réalisé sous la forme d'un logement (304) et d'un recouvrement (306), le logement (304) et/ou le recouvrement (306) étant enrobés de caoutchouc.

5. Assemblage de bandage pneumatique selon au moins une des revendications précédentes, dans lequel l'assemblage de filtre (300) est réalisé sous la forme d'un logement (304) et d'un recouvrement (306), le recouvrement possédant un ou plusieurs trous (322) pour une mise en communication entre l'air et le logement (304), le recouvrement (306) étant relié au logement (304), le logement (304) possédant une cavité interne (308) dans laquelle est logé un milieu filtrant (550), le logement (304) possédant un trou (312) mis en communication par fluide avec l'assemblage de valve (200), et une bague (500) de préférence flexible entourant le recouvrement (306).

6. Assemblage de bandage pneumatique selon au moins une des revendications précédentes, dans lequel la poche (400) possède une aire de surface supérieure à l'aire de surface du logement de filtre (304).

7. Assemblage de bandage pneumatique selon au moins une des revendications précédentes, dans lequel l'assemblage de bandage pneumatique (10) est un assemblage de bandage pneumatique destiné à maintenir de l'air.

8. Procédé de confection d'un assemblage de bandage pneumatique, le procédé comprenant les étapes consistant à :
a. procurer un bandage pneumatique cru possédant un flanc et une cavité de bandage pneumatique ;
b. former par moulage une poche (200) dans le flanc de bandage pneumatique, la poche possédant un trou s'étendant à travers le flanc du bandage pneumatique jusque dans la cavité de bandage pneumatique ;
c. former une rainure par moulage dans le flanc de bandage pneumatique ;
d. vulcaniser le bandage pneumatique ;
e. enduire une pièce de caoutchouc non vulcanisé (1000) des deux côtés de la pièce avec un ciment de caoutchouc et insérer la pièce de caoutchouc non vulcanisé dans la poche (400) ;
f. fixer le logement de filtre à la base de la pièce de caoutchouc non vulcanisé (1000) ;
g. vulcaniser la pièce de caoutchouc non vulcanisé (1000) ;
h. insérer un milieu filtrant (550) dans le logement de filtre (304) ;
i. fixer un recouvrement (306) au logement de filtre (304).

9. Procédé selon la revendication 8, comprenant en outre l'étape consistant à insérer une bague de préférence flexible (500) ou une bague de filtre autour du recouvrement (306).

10. Procédé selon la revendication 8 ou 9, comprenant en outre l'étape consistant à insérer un recouvrement de caoutchouc non vulcanisé autour de la circonférence de la bague ou de la bague de filtre, le recouvrement de caoutchouc non vulcanisé étant enduit d'un ciment de caoutchouc.

11. Procédé selon la revendication 10, dans lequel le recouvrement de caoutchouc non vulcanisé est vulcanisé.

12. Procédé selon au moins une des revendications précédentes 8 à 11, comprenant en outre les étapes consistant à réaliser par moulage un premier et un deuxième trou à travers le bandage pneumatique de chaque côté de la poche (400) et à insérer ensuite un premier et un deuxième tube de pompe à travers lesdits trous.

13. Procédé selon au moins une des revendications précédentes 8 à 12, comprenant en outre les étapes consistant à relier une première extrémité de pompe et une deuxième extrémité de pompe auxdits première et deuxième tubes de pompes.

14. Procédé selon au moins une des revendications précédentes 8 à 12, comprenant en outre l'étape consistant à insérer la pompe dans la rainure.

15. Procédé selon au moins une des revendications précédentes 8 à 14, comprenant en outre comprenant en outre les étapes suivantes consistant à :
j. brosser la surface interne du bandage pneumatique vulcanisé (12) ;
k. enduire une pièce de caoutchouc non vulcanisé (1100) des deux côtés avec du ciment de caoutchouc et insérer la pièce de caoutchouc non vulcanisé sur la surface interne brossée du bandage pneumatique (12) ;
1. fixer une surface de montage d'un dispositif de régulation (200) à la pièce de caoutchouc non vulcanisé (1100) ;
m. vulcaniser la pièce de caoutchouc non vulcanisé (1100).
